# EUROPEAN PATENT SPECIFICATION

(11) **EP 1 239 011 B1**
(45) Date of publication and mention of the grant of the patent: **26.01.2005**
(21) Application number: 02005148.8
(22) Date of filing: 07.03.2002
(51) Int. Cl.: C09D 11/00

(54) **Ink set, and recording method and recorded article using the same**
Tintensatz, Aufzeichnungsverfahren und bedruckter Artikel unter Verwendung desselben
Assortiment d'encre, procédé d'enregistrement et article imprimé utilisant cette encre

(30) Priority: 07.03.2001 JP 2001063836; 27.11.2001 JP 2001361464
(43) Date of publication of application: 11.09.2002
(73) Proprietor: SEIKO EPSON CORPORATION, Shinjuku-ku, Tokyo 163-0811 (JP)
(72) Inventor: Sano, Tsuyoshi, Suwa-shi, Nagano-ken 392-8502 (JP); Takemoto, Kiyohiko, Suwa-shi, Nagano-ken 392-8502 (JP)
(74) Representative: Grünecker, Kinkeldey, Stockmair & Schwanhäusser Anwaltssozietät

(56) References cited:
- EP-A- 0 778 321
- EP-A- 0 933 406
- EP-A- 1 038 930
- EP-A- 1 067 158

## Description

### BACKGROUND OF THE INVENTION

### 1. Field of the Invention

The present invention relates to an ink set for which the phenomenon of the colors of a printed article (color recorded image) differing according to the light source used when viewing the printed article (metamerism) has been reduced. Moreover, specific embodiments of the present invention relate to ink sets for which printing stability and light-fastness are also good.

### 2. Description of the Related Art

Various ink sets for forming vivid, high-quality color images have been developed in the past.

In Japanese Patent Application Laid-open No. H11-228888, an ink set for ink jet recording that is used together with an ink jet recording apparatus and a recording medium and contains a yellow ink, a magenta ink and a cyan ink is proposed, wherein each of the inks contains at least a specified kind of pigment that has an average particle diameter within a specified range and whose content in the ink is within a specified range, a dispersant whose content relative to the pigment content is within a specified range, and a water-based solvent.

Moreover, in Japanese Patent Application Laid-open No. H10-120956, ink sets for ink jet recording comprising a cyan ink, a magenta ink and a yellow ink are proposed, for example an ink set in which is used a combination of C.I. pigment blue 60, 22, 64 or 21 and C.I. pigment blue 15:3 as the cyan ink, and an ink set in which are combined this cyan ink, a yellow ink containing C.I. pigment yellow 109 and C.I. pigment yellow 110, and a magenta ink containing C.I. pigment red 122 or C.I. pigment red 209.

However, with these previously proposed ink sets, a printed article (color recorded image) produced by printing on a recording medium such as paper differs in color according to differences in the light source (fluorescent lamp, incandescent lamp, sunlight etc.). That is, a phenomenon (metamerism) occurs in which the colors of a printed article when the printed article is viewed using one light source are different to when the printed article is viewed using another light source. In general, metamerism refers to the phenomenon in which two colors having different spectral distributions appear to be the same color as one another under certain illumination conditions or the like, but appear to be different colors to one another when the illumination conditions or the like are changed. Here, 'illumination conditions or the like' includes not only the illumination conditions themselves, but also the temperature of the light, and the characteristics of the color vision of the viewer. Such metamerism is used in the evaluation of lighting and object colors, but metamerism with industrial products is often a problem in terms of color matching.

### SUMMARY OF THE INVENTION

It is thus an object of the present invention to provide an ink set that uses excellent pigments such as those mentioned above but for which metamerism is reduced.

The present inventors carried out assiduous studies, and as a result discovered that, in the case of an ink set comprising a yellow ink, a magenta ink and a cyan ink, the above object can be obtained if reflected light from an output color produced by color mixing through ink jet output has certain specified spectral characteristics.

Based on this discovery, the present invention provides an ink set comprising a yellow ink, a magenta ink and a cyan ink, wherein, when color mixing is carried out through ink jet output of the inks in the ink set such that the output color under a D50 light source is such that the spatial coordinates (L*,a*,b*) stipulated by the CIE are (50,0,0), the difference between the maximum value and the minimum value of the reflectance of the output color over a light source wavelength range of 400 to 700nm is not more than 20%.

Moreover, the present invention provides an ink set as above, wherein the yellow ink is such that the output color thereof through ink jet output has a reflectance of not more than 50% under a D50 light source at a light source wavelength of 500nm.

Moreover, the present invention provides an ink set as above, wherein the yellow ink is such that the output color thereof through ink jet output has a reflectance in a range of 55 to 80% under a D50 light source at a light source wavelength of 540nm.

Moreover, the present invention provides an ink set as above, wherein the yellow ink contains a yellow pigment as a colorant.

Moreover, the present invention provides an ink set as above, wherein the yellow pigment is C.I. pigment yellow 110.

Moreover, the present invention provides an ink set as above, wherein the magenta ink contains C.I. pigment red 122 and/or C.I. pigment red 202, and the cyan ink contains C.I. pigment blue 15:3 and/or C.I. pigment blue 15:4.

Moreover, the present invention provides an ink set as above, wherein each of the yellow ink, the magenta ink and the cyan ink contains a pigment as a colorant, and a block copolymer (I) as described below as a dispersant for dispersing the pigment.

The block copolymer (I) has an AB, ABA or ABC structure, wherein:
block A is hydrophilic;
block B is hydrophobic and contains at least 30wt% based on the total weight of block B of a non-acrylic monomer selected from the group consisting of:
   (1) molecules having the general formula CH₂=CH-R, where R is a C₆ to C₂₀ optionally substituted alkyl group, aryl group, aralkyl group or alkaryl group,
   (2) molecules having the general formula CH₂=CH-OR¹, where R¹ is a C₃ to C₂₀ optionally substituted alkyl group, aryl group, aralkyl group or alkaryl group,
   (3) molecules having the general formula CH₂=CH-O-C(O)R¹, where R¹ is as in (2) above, and
   (4) molecules having the general formula CH₂=CH-NR²R³, where R² and R³ are each independently H or a C₃ to C₂₀ optionally substituted alkyl group, aryl group, aralkyl group or alkaryl group, with the condition that R² and R³ are not both H; and
block C can be freely chosen.

Moreover, the present invention provides an ink set as above, wherein each of the yellow ink, the magenta ink and the cyan ink contains a 1,2-alkanediol.

Moreover, the present invention provides an ink set as above, further comprising a green ink.

Moreover, the present invention provides an ink set as above, wherein the green ink contains a green pigment as a colorant.

Moreover, the present invention provides an ink set as above, wherein the green pigment comprises C.I. pigment green 7 and/or C.I. pigment green 36.

Moreover, the present invention provides an ink set as above, further comprising a black ink.

Moreover, the present invention provides an ink set as above, further comprising a light magenta ink and a light cyan ink.

Moreover, the present invention provides an ink set as above, further comprising a black ink, a light magenta ink and a light cyan ink, wherein each of the black ink, the light magenta ink and the light cyan ink contains a pigment as a colorant, and a block copolymer (I) as described below as a dispersant for dispersing the pigment.

The block copolymer (I) has an AB, ABA or ABC structure, wherein:
block A is hydrophilic;
block B is hydrophobic and contains at least 30wt% based on the total weight of block B of a non-acrylic monomer selected from the group consisting of:
   (1) molecules having the general formula CH₂=CH-R, where R is a C₆ to C₂₀ optionally substituted alkyl group, aryl group, aralkyl group or alkaryl group,
   (2) molecules having the general formula CH₂=CH-OR¹, where R¹ is a C₃ to C₂₀ optionally substituted alkyl group, aryl group, aralkyl group or alkaryl group,
   (3) molecules having the general formula CH₂=CH-O-C(O)R¹, where R¹ is as in (2) above, and
   (4) molecules having the general formula CH₂=CH-NR²R³, where R² and R³ are each independently H or a C₃ to C₂₀ optionally substituted alkyl group, aryl group, aralkyl group or alkaryl group, with the condition that R² and R³ are not both H; and
block C can be freely chosen.

Moreover, the present invention provides an ink set as above, wherein each of the black ink, the light magenta ink and the light cyan ink contains a 1,2-alkanediol.

Moreover, the present invention provides a recording method, comprising the step of forming an image on a recording medium using an ink set as above.

Moreover, the present invention provides a recorded article, comprising a recording medium having an image formed thereon using an ink set as above.

### BRIEF DESCRIPTION OF THE DRAWINGS

Fig. 1 is a graph showing spectral characteristics (relationship between light source wavelength and reflectance) of reflected light for a gray scale image formed using the ink set of Example 1;
Fig. 2 is a graph showing spectral characteristics (relationship between light source wavelength and reflectance) of reflected light for a gray scale image formed using the ink set of Comparative Example 1;
Fig. 3 is a graph showing spectral characteristics (relationship between light source wavelength and reflectance) of reflected light for images formed using each of the inks in the ink set of Example 1;
Fig. 4 is a graph showing spectral characteristics (relationship between light source wavelength and reflectance) of reflected light for images formed using each of the inks in the ink set of Comparative Example 1;
Fig. 5 is a graph showing spectral characteristics (relationship between light source wavelength and reflectance) of reflected light for a gray scale image formed using the ink set of Example 5;
Fig. 6 is a graph showing spectral characteristics (relationship between light source wavelength and reflectance) of reflected light for a gray scale image formed using the ink set of Example 6; and
Fig. 7 is a graph showing spectral characteristics (relationship between light source wavelength and reflectance) of reflected light for a gray scale image formed using the ink set of Comparative Example 2.

### DESCRIPTION OF THE PREFERRED EMBODIMENTS

Following is a detailed description of the present invention in terms of preferred embodiments thereof.

The present invention is an ink set comprising
a yellow ink containing a yellow pigment wherein the yellow pigment consists of C.I. pigment yellow 110;
a magenta ink containing C.I. pigment red 122 and/or C.I. pigment red 202; and
a cyan ink containing C.I. pigment blue 15:3 and/or C.I. pigment blue 15:4; wherein, when color mixing is carried out through ink jet output of the inks in the ink set such that the output color under a D50 light source is such that the spatial coordinates (L*,a*,b*) stipulated by the CIE are (50,0,0), the difference between the maximum value and the minimum value of the reflectance of the output color over a light source wavelength range of 400 to 700nm is not more than 20%.

By adopting such a constitution, the phenomenon of metamerism (light source dependence), in which, when a color image is printed using the ink set, the colors of the resulting printed article when the printed article is viewed using one light source are different to when the printed article is viewed using another light source, is reduced.

If the difference between the maximum value and the minimum value of the reflectance of the output color over the light source wavelength range of 400 to 700nm exceeds 20%, then metamerism cannot be sufficiently reduced.

Note that throughout this specification, 'output color' refers, for example, to the color of an image formed by outputting onto a recording medium or the like, and includes not only the case of the output color produced when color mixing is carried out through output of a combination of inks in the ink set as described above, but also the case of the output color produced when a single ink in the ink set is outputted.

It is preferable for the difference between the maximum value and the minimum value of the reflectance of the output color to be not more than 15%, since metamerism can then be reduced further.

The color such that the spatial coordinates (L*,a*,b*) stipulated by the CIE are (50,0,0) is produced, for example, by carrying out ink jet output onto a recording medium or the like using a normal ink jet printer or the like, with color mixing being carried out in which all of the inks in an ink set comprising a yellow ink, a magenta ink and a cyan ink are mixed together in suitable proportions.

The ink set of the present invention is made to be such that the reflected light under a specified light source from the output color produced by such color mixing has specified spectral characteristics, and as a result metamerism of color recorded images is reduced. Specifically, the ink set of the present invention is made to be such that, when the output color under a D50 light source is such that the spatial coordinates (L*,a*,b*) stipulated by the CIE (Commission Internationale de l'Eclairage - International Commission on Illumination) are (50,0,0), the reflectance of the output color over a light source wavelength range of 400 to 700nm is within the above-mentioned range.

### (Yellow ink)

According to a preferred form of the present invention, the yellow ink is such that when a yellow image is formed through ink jet output of the yellow ink, the reflectance of the yellow image under a D50 light source is not more than 50% at a light source wavelength of 500nm, and is in a range of 55% to 80% at a light source wavelength of 540nm. By using such a yellow ink, metamerism reduction can be improved. In particular, by using a yellow ink such that the reflectance of the yellow image under a D50 light source is not more than 30% at a light source wavelength of 500nm, and is in a range of 60% to 75% at a light source wavelength of 540nm, metamerism reduction can be yet further improved.

Note that the conditions when forming the yellow image are normal conditions, for example the yellow image is formed by outputting the yellow ink onto a recording medium or the like through ink jet output using a normal ink jet printer or the like.

The yellow ink that is such that the reflectance of the yellow image is not more than 50% at a light source wavelength of 500nm and is in a range of 55% to 80% at a light source wavelength of 540nm as described above preferably contains a yellow pigment as a colorant, but may alternatively contain a yellow dye.

The yellow ink contains as the yellow pigment the C.I. pigment yellow 110.

Moreover, in addition to the yellow pigment, the yellow ink preferably contains water. Pigments are generally insoluble in water, and hence when adding a pigment to a water-based ink, a dispersant such as a resin is also mixed into the ink, thus stably dispersing the pigment in the water.

Following is a detailed description for the case that a pigment is used.

By suitably selecting the type and particle diameter of the pigment, the type of resin used, the dispersion means and so on, the pigment can be dispersed stably in the water-based ink.

The amount of the pigment added to the ink may be selected as appropriate from a range such that images having good hues can be realized, and also good light-fastness and water resistance can be obtained; it is preferable, for example, for this amount to be 10wt% or less.

It is preferable for the pigment to be added to the ink in the form of a pigment dispersion obtained by dispersing the pigment in a water-based solvent using a dispersant or a surfactant. As a preferable dispersant, a dispersant that is commonly used in the preparation of pigment dispersions, for example a macromolecular dispersant, can be used.

An example of a particularly preferable dispersant for dispersing the pigment is a block copolymer (I) having an AB, ABA or ABC structure. Use of such a block copolymer (I) is preferable in terms of it being possible to obtain good printing stability and light-fastness. The block copolymer (I) is the dispersant disclosed in Japanese Patent Application Laid-open No. H11-269418.

In the AB, ABA or ABC structure of the block copolymer (I), block A is hydrophilic, block B is hydrophobic and contains at least 30wt% based on the total weight of block B of a non-acrylic monomer selected from the group consisting of (1) to (4) below, and block C can be freely chosen.
(1) Molecules having the general formula CH₂=CH-R, where R is a C₆ to C₂₀ substituted or unsubstituted alkyl group, aryl group, aralkyl group or alkaryl group; here, 'substituted' means that the alkyl group, aryl group, aralkyl group or alkaryl group contains one or more substituents that do not hamper the polymerization process; such substituents include, for example, hydroxy groups, amino groups, ester groups, acid groups, acyloxy groups, amide groups, nitrile groups, halogen atoms, haloalkyl groups and alkoxy groups. Specific examples of CH₂=CH-R include styrene, α-methylstyrene, vinylnaphthalene, vinylcyclohexane, vinyltoluene, vinylanisole, vinylbiphenyl, and vinyl-2-norbornene.
(2) Molecules having the general formula CH₂=CH-OR¹, where R¹ is a C₃ to C₂₀ substituted or unsubstituted alkyl group, aryl group, aralkyl group or alkaryl group; here, the meaning of 'substituted' is as in (1) above. Specific examples of CH₂=CH-OR¹ include vinyl n-propylether, vinyl t-butylether, vinyl decyl ether, vinyl isooctyl ether, vinyl octadecyl ether, and vinyl phenyl ether.
(3) Molecules having the general formula CH₂=CH-O-C(O)R¹, where R¹ is as in (2) above. Specific examples of CH₂=CH-O-C(O)R¹ include vinyl propionate, vinyl butyrate, vinyl n-decanoate, vinyl stearate, vinyl laurate, and vinyl benzoate.
(4) Molecules having the general formula CH₂=CH-NR²R³, where R² and R³ are each independently H or a C₃ to C₂₀ substituted or unsubstituted alkyl group, aryl group, aralkyl group or alkaryl group, with the condition that R² and R³ are not both H; here, the meaning of 'substituted' is as in (1) above. Specific examples of CH₂=CH-NR²R³ include N-vinyl carbazole and vinyl phthalimide.

In the above block copolymer having an AB, ABA or ABC structure, each of the letters A, B and C represents a block of the copolymer. Different letters thus represent blocks having a different monomer composition, whereas two instances of the same letter represent blocks having the same monomer composition. An AB block copolymer is thus a diblock that contains two different blocks; an ABA block copolymer contains three blocks, but there are only two different types of block (i.e. the two blocks A are the same); an ABC block copolymer also contains three blocks, but all three blocks are different to one another.

Moreover, in the above structure, regardless of which block copolymer is used, block B is hydrophobic and is thus capable of bonding to the colorant. Moreover, block A is hydrophilic and is thus soluble in the aqueous vehicle. In the case of an ABA structure or an ABC structure, the third block (the second block A or the block C) is used for fine adjustment of the balance between the hydrophobic and hydrophilic properties of the polymer. The third block may thus be a hydrophilic block (the case ABA), or may have a composition different to either the block A or the block B (the case ABC). Note that 'aqueous vehicle' here generally refers to water and water-soluble organic solvents.

The hydrophobic block must be sufficiently large so that effective bonding to the surface of the pigment takes place. The number average molecular weight of this block is thus at least 300, preferably at least 500. The hydrophilic block must be sufficiently large so as to bring about a 3-D stabilization mechanism and an electrostatic stabilization mechanism for producing stable dispersion. It is also preferable for the balance to be maintained between the size of the hydrophilic block and the size of the hydrophobic block such that the polymer as a whole is soluble in the aqueous vehicle.

The hydrophobic block may also contain other ethylenic unsaturated monomers, i.e. acrylic monomers. Specific examples of such monomers include C₁ to C₂₀ esters of acrylic acid or methacrylic acid, for example methyl acrylate, ethyl acrylate, n-butyl acrylate, 2-ethylhexyl acrylate, methyl methacrylate, ethyl methacrylate, n-butyl methacrylate, t-butyl methacrylate, 2-ethylhexyl methacrylate, cyclohexyl methacrylate and so on.

The hydrophilic block can be prepared from ethylenic unsaturated monomers. This hydrophilic block must be soluble in the selected aqueous vehicle, and may thus contain up to 100wt%, preferably at least 50wt%, of an ionizable monomer based on the total weight of the hydrophilic block. The selection of the ionizable monomer depends on the desired ionic properties of the ink, corresponding to the selected use. In the case of an anionic block copolymer dispersant, such ionizable monomers are mainly monomers containing an acid group or an acid precursor group. Specific examples of useful monomers include acrylic acid, methacrylic acid, crotonic acid, itaconic acid, itaconic acid monoesters, maleic acid, maleic acid monoesters, fumaric acid and fumaric acid monoesters.

In the case of a cationic block copolymer dispersant, preferable ionic monomers in the hydrophilic part are amine-containing monomers. The amine groups may be primary, secondary or tertiary amine groups, or a mixture thereof. Specific examples of amine-containing monomers include N,N-dimethylaminoethyl acrylate, N,N-dimethylaminoethyl methacrylate, N,N-diethylaminoethyl methacrylate, t-butylaminoethyl methacrylate, 2-N-morpholinoethyl acrylate, 2-N-morpholinoethyl methacrylate, 4-aminostyrene, 2-vinylpyridine and vinylimidazole.

It is also possible to use non-ionic hydrophilic monomers or water-soluble monomers as appropriate, thus finely adjusting the hydrophobic/hydrophilic balance, and hence adjusting the dissolution properties of the block copolymer. Such non-ionic hydrophilic monomers or water-soluble monomers can easily be copolymerized into the hydrophobic block or the hydrophilic block, or into a separate third block such as block C of an ABC block copolymer, thus achieving the desired effects. Useful specific examples of such non-ionic hydrophilic monomers or water-soluble monomers include alkyl acrylates and alkyl methacrylates having C₁ to C₁₂ alkyl groups, for example methyl acrylate, methyl methacrylate, ethyl acrylate, ethyl methacrylate, butyl acrylate and butyl methacrylate, and also acrylamide and methacrylamide.

The block copolymer used as a dispersant in the present invention can be manufactured efficiently by using a macromonomer as an intermediate and making a plurality of blocks simultaneously and continuously. A macromonomer that has a polymerizable double bond at an end thereof and will become one of the blocks of the block copolymer is first prepared. This is then copolymerized with a monomer selected for use as the second block. In the case of an ABA or ABC triblock copolymer, it is preferable to start with the synthesis of the hydrophilic macromonomer as the first block. In the case of an AB block copolymer, synthesis of either the hydrophobic macromonomer or the hydrophilic macromonomer is an effective first step. The macromonomer is best prepared using a free radical polymerization method, preferably using a catalytic chain transfer agent or an organic chain transfer agent to make chain transfer possible; a cobalt (II) or cobalt (III) complex can be used as a catalytic chain transfer agent. The organic chain transfer agents include allyl sulfides, allyl bromides and methacrylate oligomers having vinyl terminal groups, including dimers, α-methylstyrene dimers and related compounds thereof.

Moreover, the block copolymer can be synthesized via a macromonomer as disclosed in International Patent Application Laid-open No. WO96/15157 (June 1996). A block copolymer useful in the present invention has a weight average molecular weight of approximately 1,000 to 50,000, preferably 2,000 to 20,000.

An AB block copolymer prepared by the above method has a polymerizable double bond at an end thereof, and hence an ABA or ABC block copolymer can be formed via conventional free radical polymerization in the above method by further polymerizing with another monomer group.

Many commonly used organic solvents can be used as the polymerization medium when preparing both the macromonomer and the block copolymer. Examples include, but are not limited to, alcohols such as methanol, ethanol, n-propanol, and isopropanol, ketones such as acetone, butanone, pentanone and hexanone, tetrahydrofuran, diethyl ether, ethers such as ethylene glycol monoalkyl ethers, ethylene glycol dialkyl ethers, polyethylene glycol monoalkyl ethers and polyethylene glycol dialkyl ethers, for example the commonly available Cellosolve and Carbitol, alkyl esters of acetic acid, propionic acid and butyric acid, glycols such as ethylene glycol, and mixtures of the above.

To make the block copolymer soluble in the aqueous vehicle, it is necessary to produce salts of the ionic groups in the hydrophilic part. Salts of acid groups can be prepared by neutralizing with a neutralizer such as base. Specific examples of useful bases include alkali metal hydroxides (lithium hydroxide, sodium hydroxide and potassium hydroxide), alkali metal carbonates and bicarbonates (sodium carbonate, potassium carbonate, sodium bicarbonate and potassium carbonate), organic amines (monomethylamine, dimethylamine, trimethylamine, morpholine, N-methylmorpholine), organic alcohol amines (N,N-dimethylethanolamine, N-methyldiethanolamine, monoethanolamine, diethanolamine, triethanolamine), ammonium salts (ammonium hydroxide, tetraalkylammonium hydroxide), and pyridine. In the case of a cationic block copolymer dispersant, the amino groups are neutralized with an acid such as an organic acid or an inorganic acid. Specific examples of useful acids include organic acids (acetic acid, propionic acid, formic acid, oxalic acid), hydroxylated acids (glycolic acid, lactic acid), halogenated acids (hydrochloric acid, hydrobromic acid), and inorganic acids (sulfuric acid, phosphoric acid, nitric acid).

The dispersant described above is preferably used in an amount of 0.1 to 2.0wt%, more preferably 0.2 to 1.0wt%, relative to the pigment.

Moreover, the yellow ink preferably contains a 1,2-alkanediol. In general, the idea of adding a penetration promoter such as triethylene glycol monobutyl ether (TEGmBE) to improve the penetrability of an ink composition is known. However, by using a 1,2-alkanediol as a penetration promoter instead of TEGmBE or the like, the same level of penetrability into media can be realized using a smaller amount of the penetration promoter. When using a 1,2-alkanediol, the amount of the penetration promoter added to the ink can thus be reduced. This is advantageous in terms of improving the stability of the state of dispersion of the pigment in the ink, and hence the storage stability and reliability of the ink can be improved. Moreover, the permissible amount of addition of components other than the colorant in the yellow ink can be increased, which is advantageous from the viewpoint of ink design and improvement. Moreover, when using a 1,2-alkanediol, the increase in the viscosity of the ink can be kept down better than when using a commonly used penetration promoter such as TEGmBE, and hence it also becomes possible to increase the amount added of a humectant.

It is preferable to use a C₄ to C₁₀ 1,2-alkanediol as the 1,2-alkanediol. Moreover, two or more 1, 2-alkanediols may be used mixed together.

In a more preferable form of the present invention, the 1,2-alkanediol is selected from the group consisting of 1,2-butanediol, 1,2-pentanediol, 1,2-hexanediol, 1,2-heptanediol and mixtures thereof. These 1,2-alkanediols are preferable in terms of giving particularly good penetrability into the recording medium.

In a yet more preferable form of the present invention, the 1,2-alkanediol is preferably 1,2-hexanediol or 1,2-pentanediol, more preferably 1,2-hexanediol.

The yellow ink preferably contains the 1,2-alkanediol in a range of 0.5 to 10wt%, more preferably 1 to 5wt%, relative to the total weight of the yellow ink. It is advantageous for the 1,2-alkanediol content to be at least 0.5wt%, since then sufficient penetrability can be obtained, and for the 1,2-alkanediol content to be not more than 10wt%, since then when the 1,2-alkanediol is combined with other additives, the ink viscosity can be easily adjusted to enable printing.

According to a more preferable form of the present invention, in the case that the 1,2-alkanediol is 1,2-butanediol, the yellow ink preferably contains 3 to 10wt%, more preferably 5 to 10wt%, of the 1,2-butanediol; in the case that the 1,2-alkanediol is 1,2-pentanediol, the yellow ink preferably contains 3 to 10wt%, more preferably 3 to 7wt%, of the 1,2-pentanediol; in the case that the 1,2-alkanediol is 1,2-hexanediol, the yellow ink preferably contains 1 to 6wt%, more preferably 3 to 5wt%, of the 1,2-hexanediol; and in the case that the 1,2-alkanediol is 1,2-heptanediol, the yellow ink preferably contains 0.5 to 3wt%, more preferably 1 to 2wt%, of the 1,2-heptanediol.

Moreover, the yellow ink preferably contains an organic solvent. This organic solvent is preferably a low-boiling-point organic solvent; preferable examples thereof include methanol, ethanol, n-propanol, isopropanol, n-butanol, sec-butanol, tert-butanol, isobutanol and n-pentanol. In particular, a monohydric alcohol is preferable. The low-boiling-point organic solvent has an effect of reducing the drying time of the ink.

Moreover, the yellow ink preferably further contains a high-boiling-point organic solvent. Preferable examples of the high-boiling-point organic solvent include polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerol, trimethylolethane and trimethylolpropane, polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether and triethylene glycol monobutyl ether, urea, 2-pyrrolidone, N-methyl-2-pyrrolidone, 1,3-dimethyl-2-imidazolidinone and triethanolamine.

The amount added of the low-boiling-point organic solvent is preferably in a range of 0.5 to 10wt%, more preferably 1.5 to 6wt%, of the ink. Moreover, the amount added of the high-boiling-point organic solvent is preferably in a range of 0.5 to 40wt%, more preferably 2 to 20wt%, of the ink.

Moreover, the yellow ink preferably contains an acetylenic glycol type surfactant (for example, Olfine Y, E1010 or STG, or Surfinol 82, 104, 440, 465 or 485 (all made by Shin-Etsu Chemical Co., Ltd.) etc.) as a surfactant.

Moreover, the yellow ink can also contain other surfactants; examples of preferable surfactants include anionic surfactants (for example, sodium dodecylbenzene sulfonate, sodium laurate, ammonium polyoxyethylene alkyl ether sulfate etc.), and non-ionic surfactants (for example, polyoxyethylene alkyl ethers, polyoxyethylene alkyl esters, polyoxyethylene sorbitan fatty acid esters, polyoxyethylene alkyl phenyl ethers, polyoxyethylene alkyl amines, polyoxyethylene alkyl amides etc.)

Such surfactants may either be used alone, or two or more types can be used mixed together.

Moreover, the yellow ink preferably contains a resin emulsion. Here 'resin emulsion' means an emulsion in which the continuous phase is water, and the dispersed phase is a resin component such as an acrylic resin, a vinyl acetate resin, a styrene-butadiene resin, a vinyl chloride resin, an acrylic-styrene resin, a butadiene resin, a styrene resin, a crosslinked acrylic resin, a crosslinked styrene resin, a benzoguanamine resin, a phenol resin, a silicone resin, an epoxy resin or the like.

The resin is preferably a polymer that has both a hydrophilic part and a hydrophobic part. There are no particular limitations on the particle diameter of the resin component provided the emulsion can be formed, although it is preferable for the particle diameter to be not more than about 150nm, more preferably about 5 to 100nm.

The resin emulsion can be obtained through dispersion polymerization of a resin monomer in water, in the presence of a surfactant as required. For example, an emulsion of an acrylic resin or a styrene-acrylic resin can be obtained by carrying out the dispersion polymerization of a (meth)acrylic acid ester, or a (meth)acrylic acid ester and styrene, in water in the presence of a surfactant. The mixing proportion of the resin component to the surfactant is usually preferably made to be in a range of about 10:1 to 5:1. If the amount used of the surfactant is in this range, then an ink can be obtained having better water resistance and penetrability. There are no particular limitations on the surfactant, but preferable examples include the surfactants mentioned above.

Moreover, as the proportion of the water to the resin that makes up the dispersed phase component, a range of 60 to 400, preferably 100 to 200, parts by weight of water to 100 parts by weight of the resin is appropriate.

A publicly known resin emulsion can also be used as the resin emulsion. For example, the resin emulsions disclosed in Japanese Patent Publication No. S62-1426, Japanese Patent Application Laid-open No. H3-56573, Japanese Patent Application Laid-open No. H3-79678, Japanese Patent Application Laid-open No. H3-160068 and Japanese Patent Application Laid-open No. H4-18462 can be used as is.

Moreover, a commercially available resin emulsion can be used; examples include Microgel E-1002 and E-5002 (styrene-acrylic resin emulsions made by Nippon Paint Co., Ltd.), Boncoat 4001 (an acrylic resin emulsion made by Dainippon Ink and Chemicals, Inc.), Boncoat 5454 (a styrene-acrylic resin emulsion made by Dainippon Ink and Chemicals, Inc.), SAE-1014 (a styrene-acrylic resin emulsion made by Nippon Zeon Co., Ltd.), and Sivynol SK-200 (an acrylic resin emulsion made by Saiden Chemical Industry Co., Ltd.).

The yellow ink preferably contains the resin emulsion in an amount such that the resin component of the resin emulsion accounts for 0.1 to 40wt%, more preferably 1 to 25wt%, of the ink. The resin emulsion has an effect of suppressing penetration of the colorant component, and thus promoting fixing of the colorant component to the recording medium. Moreover, depending on the type of the resin emulsion, the resin emulsion may form a coating film on the surface of the ink image on the recording medium, thus improving the wear resistance of the printed article.

Moreover, the yellow ink preferably contains a thermoplastic resin in the form of a resin emulsion. Here, a 'thermoplastic resin' is a resin having a softening temperature of 50 to 250°C, preferably 60 to 200°C, where 'softening temperature' means the lowest temperature out of the glass transition temperature of the thermoplastic resin, the melting point of the thermoplastic resin, the temperature at which the coefficient of viscosity of the thermoplastic resin becomes 1011 to 1012 poise, and in the case that the thermoplastic resin is in the form of a resin emulsion, the minimum film formation temperature (MFT). In the heating step in the method according to the present invention, the recording medium is heated to a temperature above the softening temperature of the thermoplastic resin.

Moreover, it is preferable for the resin to be one that forms a strong, water-resistant, wear-resistant film upon heating above the softening or melting temperature and then cooling.

Examples of the thermoplastic resin are water-insoluble thermoplastic resins and low-molecular-weight thermoplastic resins.

Specific examples of water-insoluble thermoplastic resins include, but are not limited to, polyacrylic acid, polymethacrylic acid, polymethacrylic acid esters, polyethylacrylic acid, styrene-butadiene copolymers, polybutadiene, acrylonitrile-butadiene copolymers, chloroprene copolymers, fluororesins, polyvinylidene fluoride, polyolefin resins, cellulose, styrene-acrylic acid copolymers, styrene-methacrylic acid copolymers, polystyrene, styrene-acrylamide copolymers, polyisobutyl acrylate, polyacrylonitrile, polyvinyl acetate, polyvinyl acetal, polyamides, rosin type resins, polyethylene, polycarbonates, vinylidene chloride resins, cellulose type resins, vinyl acetate resins, ethylene-vinyl acetate copolymers, vinyl acetate-acrylic copolymers, vinyl chloride resins, polyurethanes, and rosin esters.

Specific examples of low-molecular-weight thermoplastic resins include polyethylene wax, montan wax, alcohol waxes, synthetic oxidized waxes, α-olefin / maleic anhydride copolymers, animal/plant waxes such as carnauba wax, lanolin, paraffin wax, and microcrystalline wax.

The yellow ink may contain saccharides. Examples of saccharides include monosaccharides, disaccharides, oligosaccharides (including trisaccharides and tetrasaccharides) and polysaccharides, with preferable examples including glucose, mannose, fructose, ribose, xylose, arabinose, galactose, aldonic acid, glucitol, sorbit, maltose, cellobiose, lactose, sucrose, trehalose and maltotriose. Here, 'polysaccharides' is deemed to mean saccharides in the broad sense, including substances that exist widely in the natural world such as alginic acid, α-cyclodextrin and cellulose.

Moreover, derivatives of these saccharides include reducing sugars (for example, sugar alcohols (represented by the general formula HOCH₂(CHOH)ₙCH₂OH (where n is an integer from 2 to 5 inclusive)), oxidized sugars (for example, aldonic acid, uronic acid etc.), amino acids and thiosugars. Particularly preferable are sugar alcohols, with specific examples including maltitol and sorbit.

It is appropriate for the content of these saccharides to be in a range of 0.1 to 40wt%, preferably 0.5 to 30wt%, of the ink.

In addition to the above, pH regulators (for example, triethanolamine, potassium hydroxide etc.), preservatives, fungicides and the like may be added to the yellow ink as necessary.

### (Magenta ink)

According to a preferable form of the present invention, the magenta ink preferably contains a magenta pigment and water; a particularly preferable magenta pigment comprises C.I. pigment red 122 and/or C.I. pigment red 202. The amount of the pigment added to the ink may be selected as appropriate from a range such that images having good hues can be realized, and also good light-fastness and water resistance can be obtained; it is preferable, for example, for this amount to be 6wt% or less.

Moreover, as with the yellow ink described above, with the magenta ink, it is preferable for the pigment to be added to the ink in the form of a pigment dispersion obtained by dispersing the pigment in a water-based solvent using a dispersant or a surfactant. As a preferable dispersant, a dispersant that is commonly used in the preparation of pigment dispersions, for example a macromolecular dispersant, can be used. A particularly preferable dispersant is a block copolymer (I) having an AB, ABA or ABC structure as described above. Specific examples thereof, the amount added thereof and so on are as in the case of the yellow ink.

Moreover, as with the yellow ink, the magenta ink preferably contains a 1, 2-alkanediol, organic solvents, a surfactant, a resin emulsion and saccharides, and may also contain pH regulators, preservatives, fungicides and the like. Specific examples thereof, amounts added thereof and so on are as in the case of the yellow ink.

### (Cyan ink)

According to a preferable form of the present invention, the cyan ink preferably contains a cyan pigment and water; a particularly preferable cyan pigment comprises C.I. pigment blue 15:3 and/or C.I. pigment blue 15:4. The amount of the pigment added to the ink may be selected as appropriate from a range such that images having good hues can be realized, and also good light-fastness and water resistance can be obtained; it is preferable, for example, for this amount to be 6wt% or less.

Moreover, as with the yellow ink described above, with the cyan ink, it is preferable for the pigment to be added to the ink in the form of a pigment dispersion obtained by dispersing the pigment in a water-based solvent using a dispersant or a surfactant. As a preferable dispersant, a dispersant that is commonly used in the preparation of pigment dispersions, for example a macromolecular dispersant, can be used. A particularly preferable dispersant is a block copolymer (I) having an AB, ABA or ABC structure as described above. Specific examples thereof, the amount added thereof and so on are as in the case of the yellow ink.

Moreover, as with the yellow ink, the cyan ink preferably contains a 1,2-alkanediol, organic solvents, a surfactant, a resin emulsion and saccharides, and may also contain pH regulators, preservatives, fungicides and the like. Specific examples thereof, amounts added thereof and so on are as in the case of the yellow ink.

The yellow ink, the magenta ink and the cyan ink described above all preferably contain a pigment as a colorant, and a block copolymer (I) as described above as a dispersant for dispersing the pigment, since then the effects of the ink set can be improved.

Moreover, the yellow ink, the magenta ink and the cyan ink described above all preferably contain a 1,2-alkanediol, since then the effects of the ink set can be improved.

### (Green ink)

According to a preferred form of the present invention, in addition to the yellow ink, the magenta ink and the cyan ink described above, the ink set further comprises a green ink containing a green pigment; it is particularly preferable for the green pigment to comprise C.I. pigment green 36 and/or C.I. pigment green 7. By including the green ink in the ink set, the color reproducibility, in particular the color reproducibility in the green region (i.e. the ability to realize images in the green region through the green ink), can be improved. The hue of the colorant used in the yellow ink, i.e. the yellow pigment, in particular C.I. pigment yellow 110, is reddish, and hence there may be a risk of the color reproducibility in the green region dropping, and hence in the green region becoming narrow. However, by using a green ink containing a green pigment, preferably C.I. pigment green 36 and/or C.I. pigment green 7, it is possible to improve the color reproducibility in the green region.

The green ink preferably contains a green pigment and water; a particularly preferable green pigment comprises C.I. pigment green 36 and/or C.I. pigment green 7. The amount of the pigment added to the ink may be selected as appropriate from a range such that images having good hues can be realized, and also good light-fastness and water resistance can be obtained; it is preferable, for example, for this amount to be 6wt% or less.

Moreover, as with the yellow ink described above, with the green ink, it is preferable for the pigment to be added to the ink in the form of a pigment dispersion obtained by dispersing the pigment in a water-based solvent using a dispersant or a surfactant. As a preferable dispersant, a dispersant that is commonly used in the preparation of pigment dispersions, for example a macromolecular dispersant, can be used. A particularly preferable dispersant is a block copolymer (I) having an AB, ABA or ABC structure as described above. Specific examples thereof, the amount added thereof and so on are as in the case of the yellow ink.

Moreover, as with the yellow ink, the green ink preferably contains a 1, 2-alkanediol, organic solvents, a surfactant, a resin emulsion and saccharides, and may also contain pH regulators, preservatives, fungicides and the like. Specific examples thereof, amounts added thereof and so on are as in the case of the yellow ink.

### (Black ink)

According to a preferred form of the present invention, in addition to the yellow ink, the magenta ink and the cyan ink described above, or the yellow ink, the magenta ink, the cyan ink and the green ink described above, the ink set further comprises a black ink.

There are no particular limitations on the colorant and other components used in the black ink, with it being possible to use ones commonly used in black inks in ink sets; for example, a pigment such as carbon black can be used as the colorant. By including the black ink in the ink set, the sensation of solidity of images, particularly images containing three-dimensional objects, can be improved.

Moreover, as with the yellow ink described above, in the black ink, in addition to a pigment such as carbon black, it is also preferable to use a block copolymer (I) having an AB, ABA or ABC structure as described above as a dispersant for dispersing the pigment, and it is also preferable to use a 1,2-alkanediol. Specific examples thereof, amounts added thereof and so on are as in the case of the yellow ink.

### (Light magenta ink and light cyan ink)

According to a preferred form of the present invention, in addition to the yellow ink, the magenta ink and the cyan ink described above, or the yellow ink, the magenta ink, the cyan ink and the green ink described above, or the yellow ink, the magenta ink, the cyan ink and the black ink described above, or the yellow ink, the magenta ink, the cyan ink, the green ink and the black ink described above, the ink set further comprises a light magenta ink and a light cyan ink. The light magenta ink and the light cyan ink have the same compositions as the magenta ink and the cyan ink described above respectively, except that the concentration of the colorant is lowered.

### (Other inks)

In addition to the inks described above, the ink set of the present invention may as required further comprise a dark yellow ink obtained by adding small amounts of a magenta pigment and a cyan pigment to a yellow ink containing a yellow pigment. Furthermore, the ink set of the present invention may also further comprise other inks.

### (Ink set)

The ink set of the present invention basically comprises a yellow ink, a magenta ink and a cyan ink, and is such that reflected light from an image formed through ink jet output has specified spectral characteristics.

In a preferred form of the ink set of the present invention, the ink set comprises a yellow ink containing C.I. pigment yellow 110, a magenta ink containing C.I. pigment red 122 and/or C.I. pigment red 202, and a cyan ink containing C.I. pigment blue 15:3 and/or C.I. pigment blue 15:4. With this ink set, through the combination of the spectral characteristics of reflected light from images formed for each color, it is possible to reduce metamerism for an image printed using the whole ink set.

Moreover, in another preferred form of the ink set of the present invention, the ink set is a 6-color ink set basically comprising a yellow ink, a magenta ink, a cyan ink, a black ink, a light magenta ink and a light cyan ink, and is such that reflected light from an image formed through ink jet output has specified spectral characteristics.

The yellow ink, the magenta ink, the cyan ink, the black ink, the light magenta ink and the light cyan ink in this 6-color ink set preferably all contain a pigment as a colorant, and a block copolymer (I) as described above as a dispersant for dispersing the pigment, since then the effects of the ink set can be improved. Moreover, all of the inks in the 6-color ink set preferably contain a 1,2-alkanediol, since then the effects of the ink set can be improved.

According to another form of the present invention, the ink set of the present invention basically comprises a yellow ink, a magenta ink, a cyan ink, and a green ink, and is such that reflected light from an image formed through ink jet output has specified spectral characteristics.

Moreover, according to another form of the present invention, the ink set of the present invention basically comprises a yellow ink, a magenta ink, a cyan ink and a black ink, and is such that reflected light from an image formed through ink jet output has specified spectral characteristics.

Furthermore, according to another form of the present invention, the ink set of the present invention basically comprises a yellow ink, a magenta ink, a cyan ink, a green ink and a black ink, and is such that reflected light from an image formed through ink jet output has specified spectral characteristics.

Furthermore, according to another form of the present invention, the ink set of the present invention basically comprises a yellow ink, a magenta ink, a cyan ink, a green ink, a light magenta ink and a light cyan ink, and is such that reflected light from an image formed through ink jet output has specified spectral characteristics.

According to the ink set of the present invention, metamerism can be reduced. Moreover, by using the above-mentioned green ink, color reproducibility in the green region can be improved.

There are no particular limitations on the usage of the ink set of the present invention. However, in terms of it being possible to print high-resolution, high-quality images at high speed using a relatively inexpensive apparatus, the ink set of the present invention is suitable for use with ink jet recording, in which printing is carried out by making ink droplets fly onto a recording medium such as paper.

Moreover, if an image is formed on a recording medium through a recording method using the ink set of the present invention, then a vivid, high-quality image can be obtained, with metamerism being reduced.

An example of a recording method using the ink set of the present invention is a method in which an image is formed using an ink jet recording apparatus or other recording system comprising an ink cartridge housing the ink set of the present invention, and a printer head that discharges the inks of the ink set of the present invention from the ink cartridge.

Moreover, by using the ink set of the present invention, a recorded article can be obtained in which a vivid, high-quality image is formed on a recording medium, with metamerism being reduced.

### [Examples]

The present invention will now be described in further detail through the following examples. It should be noted, however, that the present invention is not limited whatsoever by these examples.

### [Example 1]

Inks of various colors having the following compositions were produced, thus preparing an ink set comprising the inks.

| (Yellow ink) | |
|---|---|
| Pigment | |
| C.I. pigment yellow 110 | 4wt% |

| Liquid medium | |
|---|---|
| Ammonium salt of styrene-acrylic copolymer (molecular weight 7000, dispersant / solid content) | 2wt% |
| Glycerol | 10wt% |
| Ethylene glycol | 3wt% |
| Triethylene glycol monobutyl ether | 5wt% |
| Triethanolamine | 0.9wt% |
| 2-pyrrolidone | 3wt% |
| Surfinol 465 (made by Shin-Etsu Chemical Co., Ltd.) | 1wt% |
| Ion-exchange water | Remainder |

| (Magenta ink) | |
|---|---|
| Pigment | |
| C.I. pigment red 122 | 3wt% |

| Liquid medium | |
|---|---|
| Ammonium salt of styrene-acrylic copolymer (molecular weight 7000, dispersant / solid content) | 1.5wt% |
| Glycerol | 15wt% |
| Ethylene glycol | 5wt% |
| Triethylene glycol monobutyl ether | 5wt% |
| Triethanolamine | 0.9wt% |
| 2-pyrrolidone | 3wt% |
| Surfinol 465 (made by Shin-Etsu Chemical Co., Ltd.) | 1wt% |
| Ion-exchange water | Remainder |

| (Cyan ink) | |
|---|---|
| Pigment | |
| C.I. pigment blue 15:3 | 2wt% |

| Liquid medium | |
|---|---|
| Ammonium salt of styrene-acrylic copolymer (molecular weight 7000, dispersant / solid content) | 1wt% |
| Glycerol | 15wt% |
| Ethylene glycol | 5wt% |
| Triethylene glycol monobutyl ether | 5wt% |
| Triethanolamine | 0.9wt% |
| 2-pyrrolidone | 3wt% |
| Surfinol 465 (made by Shin-Etsu Chemical Co., Ltd.) | 1wt% |
| Ion-exchange water | Remainder |

### [Comparative Example 1]

A yellow ink was produced as in Example 1, only changing the pigment to C.I. pigment yellow 128, and an ink set was prepared comprising this yellow ink, and magenta and cyan inks having the same compositions as in Example 1.

### Evaluation 1:

Images were recorded on recording media using the ink sets of Example 1 and Comparative Example 1, and metamerism was evaluated as follows.

An EM-900C ink jet printer (made by Seiko Epson Corporation) was used, and the ink sets of Example 1 and Comparative Example 1 were filled into ink cartridges for exclusive use with this printer. For each ink set, color mixing was carried out using the three inks in the ink set, and a monochrome gradated solid pattern (gray scale) was outputted, being printed on a recording medium for exclusive use with the printer (glossy film, made by Seiko Epson Corporation) (here and hereinafter 'solid pattern' means that the recording medium was covered by the pattern with no gaps) . The color mixing was carried out such that the same colors were produced for both ink sets under a D50 light source.

Each outputted pattern was held up to a fluorescent lamp and sunlight, and the extent of change in the colors was investigated. The results were that, with the ink set of Example 1, no great difference was found in the appearance of the colors between the light sources (i.e. metamerism was reduced). With the ink set of Comparative Example 1, on the other hand, a shift to a green color was seen under the sunlight compared with the fluorescent lamp (i.e. metamerism occurred).

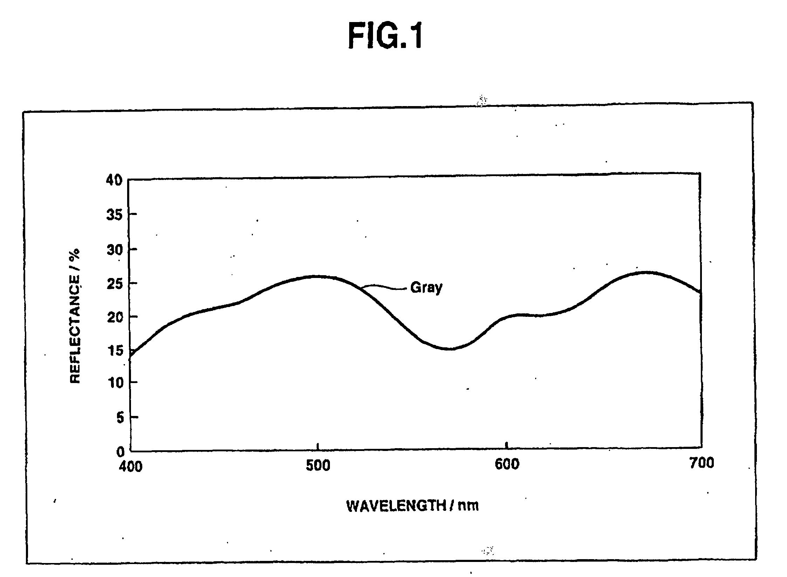

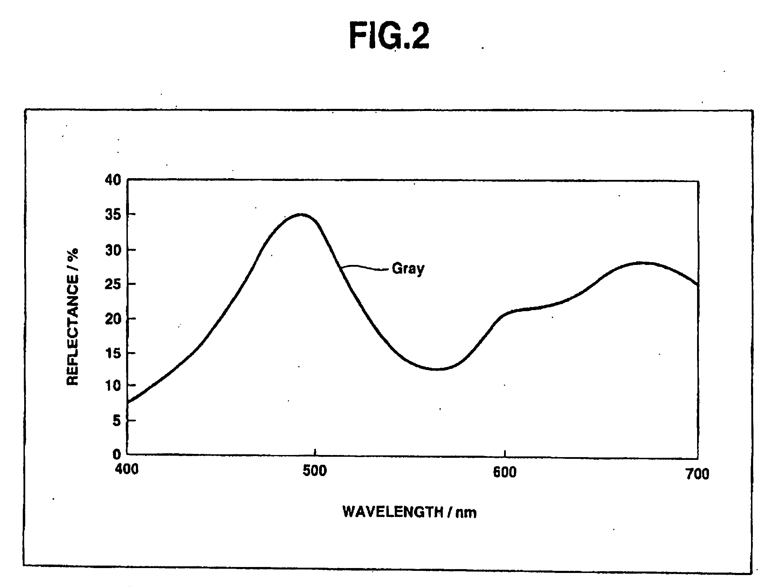

Moreover, for each of the patterns obtained, color measurements were taken using a 938 Spectrodensitometer (made by X-rite) (with a D50 light source) on the part of the pattern for which the brightness L* in the L*a*b* color system stipulated by the CIE was 50, and the spectral characteristics of the reflected light were thus investigated. It was found that a fairly flat spectral curve was formed for the image formed using the ink set of Example 1 (see Fig. 1), whereas a large peak was formed at 500nm with the ink set of Comparative Example 1 (see Fig. 2).

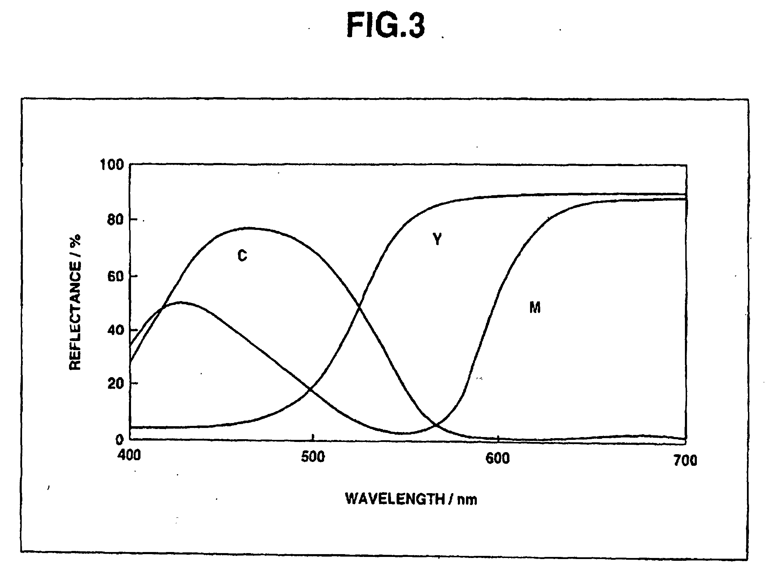

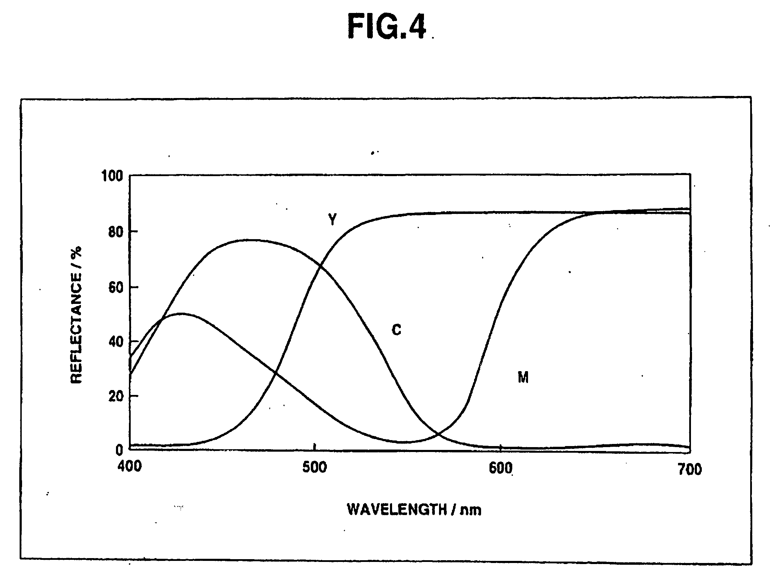

Furthermore, a 50% duty solid pattern was outputted for each of the colored inks in the ink set of Example 1 and the ink set of Comparative Example 1, and the spectral characteristics of the reflected light under a D50 light source were investigated as above, i.e. the only difference with above was that the individual colors were outputted singly without color mixing being carried out. It was found that the spectral characteristics differed between the yellow ink in the ink set of Example 1 (see Fig. 3) and the yellow ink in the ink set of Comparative Example 1 (see Fig. 4). Note that in Figs. 3 and 4, 'Y' indicates the yellow ink, 'M' the magenta ink, and 'C' the cyan ink. With the yellow ink used in Example 1, moving from low wavelength to high wavelength, the light source wavelength range over which reflection of light starts to occur as opposed to absorption is 470 to 500nm, and the reflectance of the yellow image is about 20% at 500nm, and about 70% at 540nm (see the 'Y' curve for the yellow ink in Fig. 3). As a result, the 'peak/trough difference' of the reflectance (the difference between the maximum value and the minimum value of the reflectance) for the gray scale image is only about 15% (see Fig. 1), and hence it is thought that metamerism has been reduced.

### [Example 2]

A 4-color ink set was prepared by adding a green ink containing C.I. pigment green 36 to the 3-color ink set of Example 1 comprising the yellow ink, the magenta ink and the cyan ink. The composition of the green ink was the same as that of the yellow ink used in Example 1 except that the yellow pigment was changed to C.I. pigment green 36.

### [Example 3]

A 4-color ink set the same as that of Example 2 was prepared, except that C.I. pigment green 7 was used instead of C.I. pigment green 36 as the pigment in the green ink.

### [Example 4]

A 5-color ink set was prepared by adding a black ink containing carbon black to the 4-color ink set of Example 2 comprising the yellow ink, the magenta ink, the cyan ink and the green ink. The composition of the black ink was the same as that of the magenta ink used in Example 1 except that the magenta pigment was changed to carbon black.

The same evaluation as that carried out on the ink set of Example 1 was carried out on the ink sets of Examples 2 to 4, whereupon it was found that in all cases, as with Example 1, the difference between the maximum value and the minimum value of the reflectance for the gray scale image was not more than 20%, and hence metamerism was reduced. Furthermore, color reproducibility in the green region was improved for all of the ink sets of Examples 2 to 4. Moreover, the sensation of solidity of images was improved with the ink set of Example 4 due to the presence of the black ink.

### [Examples 5 and 6, Comparative Example 2]

### Preparation of dispersants

Dispersants α and β for pigment dispersion were prepared as follows. Note that when preparing the dispersants, the procedure disclosed in Japanese Patent Application Laid-open No. H11-269418 was followed.
Dispersant α: t-butylstyrene / styrene // methacrylic acid (27 / 18 // 55wt%) block copolymer

Firstly, the following components were prepared, and a macromonomer a was produced as described below.

| | Component | Weight (g) |
|---|---|---|
| Part 1 | Methanol | 233.4 |
| | Isopropanol | 120.3 |
| Part 2 | Methacrylic acid monomer | 238.1 |
| | Methanol | 39.3 |
| Part 3 | Isopropyl-bis(borondichloromethylglyoximato) cobalt (III) salt | 0.143 |
| | 2,2'-azobis(2,2-dimethylvaleronitrile) (Vazo (trademark, made by DuPont)) | 6.52 |
| | Acetone | 87.2 |

The part 1 mixture was put into a 2-liter flask provided with a thermometer, a stirrer, an adding funnel, a reflux condenser, and means for maintaining a nitrogen blanket covering the reactants . The mixture was then heated to a reflux temperature, and was refluxed for about 20 minutes. Parts 2 and 3 were then added simultaneously while maintaining the reaction mixture at the reflux temperature. The addition of the part 2 was carried out over 4 hours, and the addition of the part 3 was carried out over 4½ hours. Refluxing was then continued for a further 2 hours, and then the solution was cooled to room temperature, thus obtaining a macromonomer solution a.

Next, in addition to the macromonomer a obtained, the following components were prepared, and the dispersant α was produced following the procedure described below.

| | Component | Weight (g) |
|---|---|---|
| Part 1a | Macromonomer a | 152.4 |
| | 2-pyrrolidone | 40.0 |
| Part 2a | Lupersol 11 (t-butyl peroxypivalate) (made be Elf Arochem North America) | 0.67 |
| | Acetone | 10.0 |
| Part 3a | 1-butylstyrene | 27.0 |
| | Styrene | 18.0 |
| Part 4a | Lupersol 11 | 2.67 |
| | Acetone | 20.0 |
| Part 5a | Lupersol 11 | 0.67 |
| | Acetone | 10.0 |

The part 1a mixture was put into a 500ml flask provided with a thermometer, a stirrer, an adding funnel, a reflux condenser, and means for maintaining a nitrogen blanket covering the reaction mixture. The mixture was then heated to a reflux temperature, and was refluxed for about 10 minutes. The part 2a solution was then added. Next, parts 3a and 4a were added simultaneously while maintaining the reaction mixture at the reflux temperature. The addition of the parts 3a and 4a was carried out over 3 hours. The reaction mixture was then refluxed for 1 hour, and then the part 5a solution was added, before refluxing the reaction mixture for 1 more hour. The mixture was then distilled until about 117g of volatile matter had been recovered, and then 75.0g of 2-pyrrolidone was added, thus obtaining 239.0g of a 41.8% polymer solution (dispersant a).
Dispersant β: Styrene / methyl methacrylate // methacrylic acid (25.0 / 29.2 // 45.8wt%) block copolymer

The following components were prepared, and the dispersant was produced following the procedure described below.

| | Component | Weight (g) |
|---|---|---|
| Part 1b | Macromonomer a | 152.4 |
| | 2-pyrrolidone | 40.0 |
| Part 2b | Lupersol 11 | 0.67 |
| | Acetone | 10.0 |
| Part 3b | Styrene | 30.0 |
| | Styrene methacrylate | 35.0 |
| Part 4b | Lupersol 11 | 2.67 |
| | Acetone | 20.0 |
| Part 5b | Lupersol 11 | 0.67 |
| | Acetone | 10.0 |

Using parts 1b to 5b above, the same procedure as for dispersant a was carried out, thus obtaining 270g of a 44.0% polymer solution (dispersant β).

### Production of ink compositions

Ink compositions A1 to A7-L were produced as follows using the dispersant α or β obtained as above.

### Ink composition A1 (yellow ink)

100g of C.I. pigment yellow 110 as a yellow pigment, 150g of the dispersant α, 6g of potassium hydroxide and 250g of water were mixed together, and dispersion was carried out for 10 hours in a ball mill using zirconia beads. The stock dispersion thus obtained was filtered using a membrane filter of pore size 8µm (made by Nihon Millipore Limited) to remove coarse particles, and then the filtrate was diluted with water until the pigment concentration was 15wt%, thus producing a yellow pigment dispersion A1.

40g of the yellow pigment dispersion A1 thus obtained, 15g of glycerol, 3g of 1, 2-hexanediol and 1g of ORUFIN E1010 were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size about 1.2µm (made by Nihon Millipore Limited), thus producing the ink composition A1 (yellow ink).

### Ink compositions A2 and A2-L (cyan ink and light cyan ink)

100g of C.I. pigment blue 15:3 as a cyan pigment, 100g of the dispersant α, 4.5g of potassium hydroxide and 250g of water were mixed together, and dispersion was carried out for 10 hours in a ball mill using zirconia beads. The stock dispersion thus obtained was filtered using a membrane filter of pore size 8µm (made by Nihon Millipore Limited) to remove coarse particles, and then the filtrate was diluted with water until the pigment concentration was 10wt%, thus producing a cyan pigment dispersion A2.

20g of the cyan pigment dispersion A2 thus obtained, 10g of glycerol, 5g of diethylene glycol, 2g of 1,2-hexanediol and 1g of ORUFIN E1010 were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by Nihon Millipore Limited), thus producing the ink composition A2 (cyan ink).

Moreover, separate to the above, 7g of the cyan pigment dispersion A2 obtained above, 20g of glycerol, 5g of diethylene glycol, 1g of 1,2-hexanediol and 0.4g of ORUFIN STG were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by Nihon Millipore Limited), thus producing the ink composition A2-L (light cyan ink).

### Ink composition A3 (yellow ink)

100g of C.I. pigment yellow 110 as a yellow pigment, 150g of the dispersant β, 6g of potassium hydroxide and 250g of water were mixed together, and dispersion was carried out for 10 hours in a ball mill using zirconia beads. The stock dispersion thus obtained was filtered using a membrane filter of pore size 8µm (made by Nihon Millipore Limited) to remove coarse particles, and then the filtrate was diluted with water until the pigment concentration was 10wt%, thus producing a yellow pigment dispersion A3.

40g of the yellow pigment dispersion A3 thus obtained, 15g of glycerol, 3g of 1, 2-hexanediol and 1g of ORUFIN E1010 were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by Nihon Millipore Limited), thus producing the ink composition A3 (yellow ink).

### Ink compositions A4 and A4-L (magenta ink and light magenta ink)

100g of C.I. pigment red 122 as a magenta pigment, 150g of the dispersant β, 6g of potassium hydroxide and 250g of water were mixed together, and dispersion was carried out for 10 hours in a ball mill using zirconia beads. The stock dispersion thus obtained was filtered using a membrane filter of pore size 8µm (made by Nihon Millipore Limited) to remove coarse particles, and then the filtrate was diluted with water until the pigment concentration was 10wt%, thus producing a magenta pigment dispersion A4.

30g of the magenta pigment dispersion A4 thus obtained, 15g of glycerol, 3g of 1, 2-hexanediol and 1g of ORUFIN E1010 were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by Nihon Millipore Limited), thus producing the ink composition A4 (magenta ink).

Moreover, separate to the above, 10g of the magenta pigment dispersion A4 obtained above, 20g of glycerol, 6g of ethylene glycol, 3g of 1,2-hexanediol and 0.4g of ORUFIN STG were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by Nihon Millipore Limited), thus producing the ink composition A4-L (light magenta ink).

### Ink composition A5 (black ink)

100g of carbon black as a black pigment, 150g of the dispersant β, 6g of potassium hydroxide and 250g of water were mixed together, and dispersion was carried out for 10 hours in a ball mill using zirconia beads. The stock dispersion thus obtained was filtered using a membrane filter of pore size 8µm (made by Nihon Millipore Limited) to remove coarse particles, and then the filtrate was diluted with water until the pigment concentration was 10wt%, thus producing a black pigment dispersion A5.

30g of the black pigment dispersion A5 thus obtained, 15g of glycerol, 3g of 1, 2-hexanediol and 1g of ORUFIN E1010 were mixed together, and ultrapure water was added to make the total weight up to 100g. The pH of the mixture was then adjusted to 8.5 using triethanolamine as a pH regulator, the mixture was agitated for 2 hours, and then the mixture was filtered using a membrane filter of pore size 1.2µm (made by NihonMillipore Limited), thus producing the ink composition A5 (black ink).

### Ink compositions A6 and A6-L (cyan ink and light cyan ink)

Ink compositions A6 (cyan ink) and A6-L (light cyan ink) were produced having the same compositions as ink compositions A2 and A2-L respectively, except that C.I. pigment blue 15:4 was used instead of the pigment used in ink compositions A2 and A2-L.

### Ink compositions A7 and A7-L (magenta ink and light magenta ink)

Ink compositions A7 (magenta ink) and A7-L (light magenta ink) were produced having the same compositions as ink compositions A4 and A4-L respectively, except that C.I. pigment red 202 was used instead of the pigment used in ink compositions A4 and A4-L.

### Printing evaluation tests

An ink jet printer MC2000C (made by Seiko Epson Corporation) was used in the evaluations, with each of the colored inks in each ink set being put into the ink chamber of the corresponding color in the ink tank of the printer. Specifically, in the case of the ink set of Example 5, the ink composition A1 was put into the yellow ink chamber, the ink composition A2 into the cyan ink chamber, the ink composition A2-L into the light cyan ink chamber, the ink composition A4 into the magenta ink chamber, the ink composition A4-L into the light magenta ink chamber, and the ink composition A5 into the black ink chamber.

Moreover, in the case of the ink set of Example 6, the following ink compositions were put into the respective ink chambers: the ink composition A3 in place of the ink composition A1 used in Example 5; the ink compositions A6 and A6-L in place of the ink compositions A2 and A2-L used in Example 5; and the ink compositions A7 and A7-L in place of the ink compositions A4 and A4-L used in Example 5.

The undermentioned sequence of evaluations was then carried out.

Note that for the sake of convenience, the ink sets of Examples 5 and 6 shall be referred to as ink set a and ink set b respectively. Ink sets a and b thus comprise the following ink compositions.

| | Example 5 | Example 6 |
|---|---|---|
| | (Ink set a) | (Ink set b) |
| Yellow | A1 | A3 |
| Cyan | A2 | A6 |
| Light cyan | A2-L | A6-L |
| Magenta | A4 | A7 |
| Light magenta | A4-L | A7-L |
| Black | A5 | A5 |

### 1. Evaluation of printing stability

Continuous printing was carried out, and it was observed whether or not dot omission and ink scattering occurred. The evaluation was carried out according to the following criteria.
A: After 48 hours, dot omission or ink scattering had occurred less than 10 times.
B: After 48 hours, dot omission or ink scattering had occurred 10 times.
C: After 24 hours, dot omission or ink scattering had occurred 10 times.
D: Dot omission or ink scattering occurred more than 10 times within 24 hours.

The evaluation result was 'A' for both ink set a and ink set b, showing that the printing stability was extremely good in both cases.

### 2. Evaluation of printed image quality

Metamerism for the case that an image was recorded on a recording medium was evaluated as follows for the ink set a and the ink set b.

For each of the ink sets a and b, color mixing was carried out using the various inks in the ink set, and a monochrome gradated solid pattern (gray scale) was outputted, being printed on a recording medium for exclusive use with the printer (glossy film, made by Seiko Epson Corporation) . This was done such that the same colors were produced for both ink sets under a D50 light source.

Each outputted pattern was held up to a fluorescent lamp and sunlight, and the extent of change in the colors was investigated. The results were that, with both the ink set a and the ink set b, no great change was found in the appearance of the colors between the light sources.

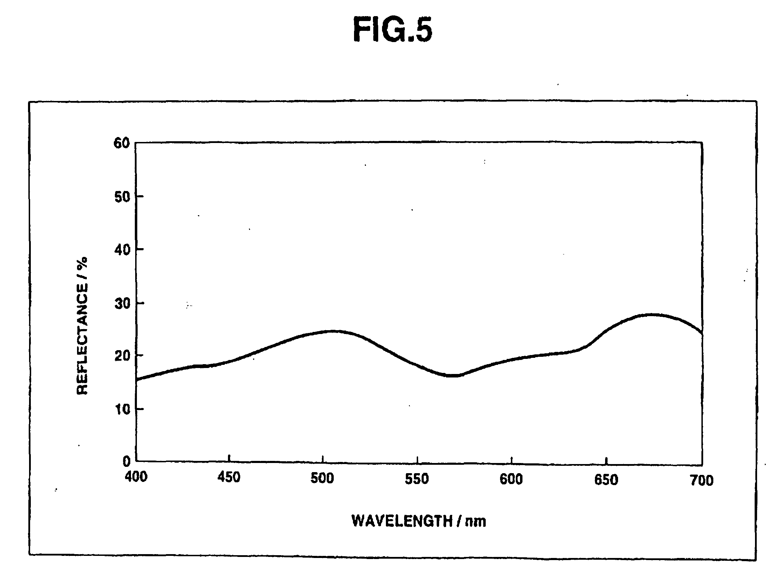

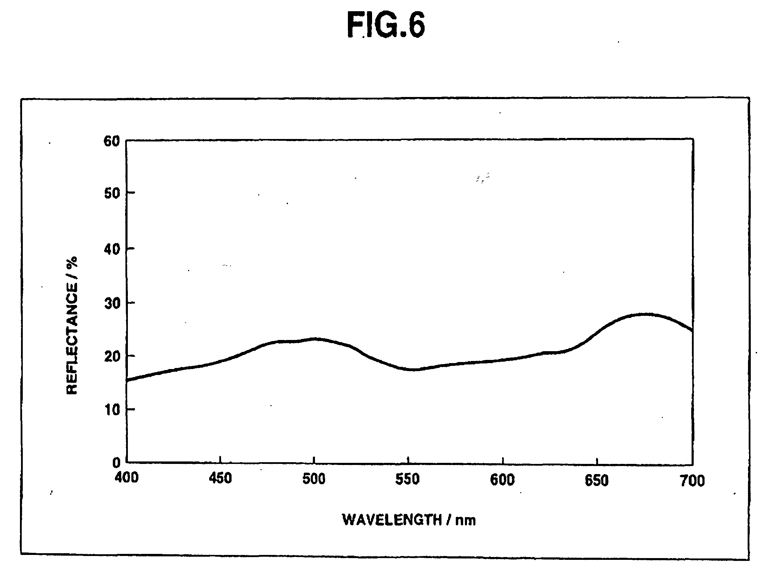

Moreover, for each of the patterns obtained, color measurements were taken using a 938 Spectrodensitometer (made by X-rite) (with a D50 light source) on the part of the pattern for which the brightness L* in the L*a*b* color system stipulated by the CIE was 50, and as in Example 1, the spectral characteristics of the reflected light were thus investigated. As shown in Fig. 5 (ink set a) and Fig. 6 (ink set b), it was found that for both of the ink sets, a fairly flat spectral curve was formed, with the difference between the maximum value and the minimum value of the reflectance for the gray scale image in the light source wavelength range of 400 to 700nm being about 10% in both cases.

### 3. Evaluation of light-fastness

Of the patterns obtained in the evaluation of the printed image quality, light-fastness tests were carried out on the solid pattern for which the OD value was 1.0. Moreover, for comparison, as Comparative Example 2, a 6-color ink set c was prepared that was the same as the ink set a, except that an ink composition A8 (yellow ink) was used in place of the ink composition A1, where the ink composition A8 was produced as for the ink composition A1 but using C.I. pigment yellow 74 in place of C.I. pigment yellow 110 as the yellow pigment; using the ink set c, a solid pattern was outputted as above, and light-fastness tests were carried out on the pattern for which color mixing had been carried out such that OD = 1.0.

The evaluation method was as follows. Firstly, the solid pattern was set in a folder for exclusive test use, and was covered with a 2mm-thick piece of soda-lime glass, with a 2mm air layer left between the printed article and the glass. The folder was then mounted in a xenon light-fastness test apparatus Ci5000 (made by Atlas), and an exposure test was carried out.

The operating environment of the test apparatus was made to be as follows.
Light source: Xenon lamp
Output illuminance: 55W/m² (total illuminance in 300 to 400nm range)
Exposure time: 720 hours
Filters: Inner: Borosilicate
Outer: Soda-lime
Temperature in chamber: 30°C
Humidity in chamber: 45% RH

The results were that, with the ink set a, virtually no color degradation could be seen with the naked eye. Moreover, the OD value was 0.93, showing that the color persistence rate was 93%.

In contrast, with the ink set c, the color could be seen to have changed greatly, and the OD value was 0.65, and thus the persistence rate 65%, which is a level below that required for practical use.

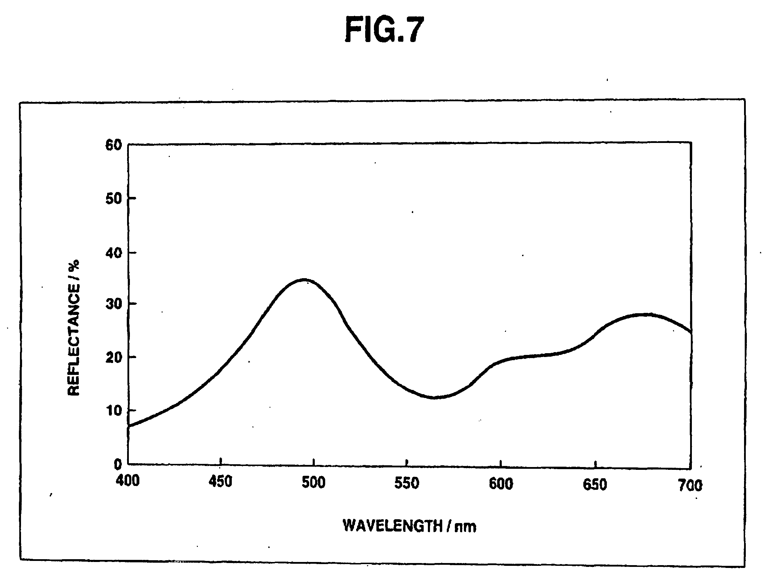

Moreover, for the ink set c, the spectral characteristics of the reflected light were investigated as in Example 1, whereupon the spectral curve was found not to be flat, with the difference between the maximum value and the minimum value of the reflectance for the gray scale image over a light source wavelength range of 400 to 700nm being 28% (see Fig. 7). Furthermore, the reflectance of the output color through ink jet output of the ink composition A8 (yellow ink) used in the ink set c under a D50 light source was 60% at a light source wavelength of 500nm, and 80% at a light source wavelength of 540nm.

According to the ink set of the present invention, metamerism (the phenomenon in which the colors of a printed article (color recorded image) differ according to the light source used when viewing the printed article) is reduced. Moreover, according to specific embodiments of the ink set of the present invention, printing stability and light-fastness are also good.

## Claims

1. An ink set comprising:
a yellow ink containing a yellow pigment wherein the yellow pigment consists of C.I. pigment yellow 110;
a magenta ink containing C.I. pigment red 122 and/or C.I. pigment red 202; and
a cyan ink containing C.I. pigment blue 15:3 and/or C.I. pigment blue 15:4;
wherein, when color mixing is carried out through ink jet output of the inks in the ink set such that the output color under a D50 light source is such that spatial coordinates (L*,a*,b*) stipulated by the CIE are (50,0,0), the difference between the maximum value and the minimum value of the reflectance of the output color over a light source wavelength range of 400 to 700nm is not more than 20%.

2. The ink set according to claim 1, wherein said yellow ink is such that the output color thereof through ink jet output has a reflectance of not more than 50% under a D50 light source at a light source wavelength of 500nm.

3. The ink set according to claim 1 or 2, wherein said yellow ink is such that the output color thereof through ink jet output has a reflectance in a range of 55 to 80% under a D50 light source at a light source wavelength of 540nm.

4. The ink set according to any of claims 1 through 3, wherein each of said yellow ink, said magenta ink and said cyan ink contains a block copolymer (I) as a dispersant for dispersing the pigment;
wherein said block copolymer (I) has an AB, ABA or ABC structure;
wherein block A is hydrophilic;
block B is hydrophobic and contains at least 30wt% based on the total weight of block B of a non-acrylic monomer selected from the group consisting of
(1) molecules having the general formula CH₂=CH-R, where R is a C₆ to C₂₀ optionally substituted alkyl group, aryl group, aralkyl group or alkaryl group,
(2) molecules having the general formula CH₂=CH-OR¹, where R¹ is a C₃ to C₂₀ optionally substituted alkyl group, aryl group, aralkyl group or alkaryl group,
(3) molecules having the general formula CH₂=CH-O-C(O)R¹, where R¹ is as in (2) above, and
(4) molecules having the general formula CH₂=CH-NR²R³, where R² and R³ are each independently H or a C₃ to C₂₀ optionally substituted alkyl group, aryl group, aralkyl group or alkaryl group, with the condition that R² and R³ are not both H; and
block C can be freely chosen.

5. The ink set according to any of claims 1 through 4, wherein each of said yellow ink, said magenta ink and said cyan ink contains a 1,2-alkanediol.

6. The ink set according to any of claims 1 through 5, wherein each of said yellow ink, said magenta ink and said cyan ink contains an acetylenic glycol type surfactant.

7. The ink set according to any of claims 1 through 6, further comprising a green ink.

8. The ink set according to claim 7, wherein said green ink contains a green pigment as a colorant.

9. The ink set according to claim 8, wherein said green pigment comprises C.I. pigment green 7 and/or C.I. pigment green 36.

10. The ink set according to any of claims 1 through 9, further comprising a black ink.

11. The ink set according to any of claims 1 through 10, further comprising a light magenta ink and a light cyan ink.

12. The ink set according to any of claims 1 through 9, further comprising a black ink, a light magenta ink and a light cyan ink, wherein each of said black ink, said light magenta ink and said light cyan ink contains a pigment as a colorant, and a block copolymer (I) as a dispersant for dispersing the pigment;
wherein said block copolymer (I) has an AB, ABA or ABC structure;
wherein block A is hydrophilic;
block B is hydrophobic and contains at least 30wt% based on the total weight of block B of a non-acrylic monomer selected from the group consisting of
(1) molecules having the general formula CH₂=CH-R, where R is a C₆ to C₂₀ optionally substituted alkyl group, aryl group, aralkyl group or alkaryl group,
(2) molecules having the general formula CH₂=CH-OR¹, where R¹ is a C₃ to C₂₀ optionally substituted alkyl group, aryl group, aralkyl group or alkaryl group,
(3) molecules having the general formula CH₂=CH-O-C(O)R¹, where R¹ is as in (2) above, and
(4) molecules having the general formula CH₂=CH-NR²R³, where R² and R³ are each independently H or a C₃ to C₂₀ optionally substituted alkyl group, aryl group, aralkyl group or alkaryl group, with the condition that R² and R³ are not both H; and
block C can be freely chosen.

13. The ink set according to claim 12, wherein each of said black ink, said light magenta ink and said light cyan ink contains a 1,2-alkanediol.

14. The ink set according to claim 13, wherein each of said black ink, said light magenta ink and said light cyan ink further contains an acetylenic glycol type surfactant.

15. A recording method, wherein an image is formed on a recording medium using the ink set according to any of claims 1 through 14.

16. A recorded article, comprising a recording medium having an image formed thereon using the ink set according to any of claims 1 through 14.

## Patentansprüche

1. Tintensatz umfassend:
eine gelbe Tinte, enthaltend ein gelbes Pigment, wobei das gelbe Pigment aus C.I. Pigment Yellow 110 besteht;
eine Magentatinte, umfassend C.I. Pigment Red 122 und/oder C.I. Pigment Red 202; und
eine Cyantinte, enthaltend C.I. Pigment Blue 15:3 und/oder C.I. Pigment Blue 15:4;
wobei der Unterschied zwischen dem Höchstwert und dem Mindestwert des Refelexionsvermögens der Ausgabefarbe über einen Lichtquellen-Wellenlängenbereich von 400 bis 700 nm nicht mehr als 20 % beträgt, wenn das Farbvermischen über eine Tintenstrahlausgabe der Tinten in dem Tintensatz durchgeführt wird, so dass die Ausgabefarbe unter einer D50-Lichtquelle so ist, dass die räumlichen Koordinaten (L*, a*, b*), die durch das ClE-Farbsystem festgelegt sind, (50, 0, 0) betragen.

2. Der Tintensatz nach Anspruch 1, wobei die gelbe Tinte so ist, dass die Ausgabefarbe davon durch eine Tintenstrahlausgabe ein Reflexionsvermögen von nicht mehr als 50% unter einer D50-Lichtquelle bei einer Lichtquellen-Wellenlänge von 500 nm besitzt.

3. Der Tintensatz nach Anspruch 1 oder 2, wobei die gelbe Tinte so ist, dass die Ausgabefarbe davon durch eine Tintenstrahlausgabe ein Reflexionsvermögen im Bereich von 55 bis 80% unter einer D50-Lichtquelle mit einer Lichtquellen-Wellenlänge von 540 nm besitzt.

4. Der Tintensatz nach einem der Ansprüche 1 bis 3, wobei jede der gelben Tinte, der Magentatinte und der Cyantinte ein Blockcopolymer (I) als ein Dispergiermittel zum Dispergieren des Pigments enthält;
wobei das Blockcopolymer (I) eine AB-, ABA- oder ABC-Struktur besitzt;
wobei Block A hydrophil ist;
Block B hydrophob ist und wenigstens 30 Gew.-%, bezogen auf das Gesamtgewicht des Blocks B, eines Nicht-Acryl-Monomers enthält, ausgewählt aus der Gruppe, bestehend aus
(1) Molekülen mit der allgemeinen Formel CH₂=CH-R, wobei R eine C₆ bis C₂₀-, wahlweise substituierte Alkylgruppe, Arylgruppe, Aralkylgruppe oder Alkarylgruppe darstellt,
(2) Molekülen mit der allgemeinen Formel CH₂=CH-OR¹, wobei R¹ eine C₃ bis C₂₀-, wahlweise substituierte Alkylgruppe, Arylgruppe, Aralkylgruppe oder Alkarylgruppe darstellt,
(3) Molekülen mit der allgemeinen Formel CH₂=CH-O-C(O)R¹, wobei R¹ wie in (2) oben definiert ist, und
(4) Molekülen mit der allgemeinen Formel CH₂=CH-NR²R³, wobei R² und R³ jeweils unabhängig voneinander H oder eine C₃ bis C₂₀-, wahlweise substituierte Alkylgruppe, Arylgruppe, Aralkylgruppe oder Alkarylgruppe darstellen, unter der Bedingung, dass R² und R³ nicht beide H sind; und
Block C frei ausgewählt werden kann.

5. Der Tintensatz nach einem der Ansprüche 1 bis 4, wobei jede der gelben Tinte, der Magentatinte und der Cyantinte ein 1,2-Alkandiol enthält.

6. Der Tintensatz nach einem der Ansprüche 1 bis 5, wobei jede der gelben Tinte, der Magentatinte und der Cyantinte ein oberflächenaktives Mittel vom acetylenischen Glycoltyp enthält.

7. Der Tintensatz nach einem der Ansprüche 1 bis 6, weiterhin umfassend eine grüne Tinte.

8. Der Tintensatz nach Anspruch 7, wobei die grüne Tinte ein grünes Pigment als Farbmittel enthält.

9. Der Tintensatz nach Anspruch 8, wobei das grüne Pigment C.I. Pigment Green 7 und/oder C.I. Pigment Green 36 umfasst.

10. Der Tintensatz nach einem der Ansprüche 1 bis 9, weiterhin umfassend eine schwarze Tinte.

11. Der Tintensatz nach einem der Ansprüche 1 bis 10, weiterhin umfassend eine helle Magentatinte und eine helle Cyantinte.

12. Der Tintensatz nach einem der Ansprüche 1 bis 9, weiterhin umfassend eine chwarze Tinte, eine helle Magentatinte und eine helle Cyantinte, wobei jede der schwarzen Tinte, der hellen Magentatinte und der hellen Cyantinte ein Pigment als ein Farbmittel und ein Blockcopolymer (I) als ein Dispergiermittel zum Dispergieren des Pigments enthält;
wobei das Blockcopolymer (I) eine AB-, ABA- oder ABC-Struktur besitzt;
wobei Block A hydrophil ist;
Block B hydrophob ist und wenigstens 30 Gew.-%, bezogen auf das Gesamtgewicht des Blocks B, eines Nicht-Acryl-Monomers enthält, ausgewählt aus der Gruppe, bestehend aus
(1) Molekülen mit der allgemeinen Formel CH2=CH-R, wobei R eine C₆ bis C₂₀-, wahlweise substituierte Alkylgruppe, Arylgruppe, Aralkylgruppe oder Alkarylgruppe darstellt,
(2) Molekülen mit der allgemeinen Formel CH2=CH-OR1, wobei R1 eine C₃ bis C₂₀-, wahlweise substituierte Alkylgruppe, Arylgruppe, Aralkylgruppe oder Alkarylgruppe darstellt,
(3) Molekülen mit der allgemeinen Formel CH2=CH-O-C(O)R1, wobei R1 wie in (2) oben definiert ist, und
(4) Molekülen mit der allgemeinen Formel CH2=CH-NR2R3, wobei R2 und R3 jeweils unabhängig voneinander H oder eine C₃ bis C₂₀-, wahlweise substituierte Alkylgruppe, Arylgruppe, Aralkylgruppe oder Alkarylgruppe darstellen, unter der Bedingung, dass R2 und R3 nicht beide H sind; und
Block C frei ausgewählt werden kann.

13. Der Tintensatz nach Anspruch 12, wobei jede der schwarzen Tinte, der hellen Magentatinte und der hellen Cyantinte ein 1,2-Alkandiol enthält.

14. Der Tintensatz nach Anspruch 13, wobei jede der schwarzen Tinte, der hellen Magentatinte und der hellen Cyantinte außerdem ein oberflächenaktives Mittel vom acetylenischen Glycoltyp enthält.

15. Aufzeichnungsverfahren, wobei ein Bild auf einem Aufzeichnungsmedium unter Verwendung des Tintensatzes nach einem der Ansprüche 1 bis 14 gebildet wird.

16. Aufgezeichneter Artikel, umfassend ein Aufzeichnungsmedium mit einem Bild, das unter Verwendung des Tintensatzes nach einem der Ansprüche 1 bis 14 gebildet wird.

## Revendications

1. Assortiment d'encres comprenant :
une encre jaune contenant un pigment jaune dans laquelle le pigment jaune est constitué de C.I. pigment yellow 110 ;
une encre magenta contenant C.I. pigment red 122 et/ou C.I. pigment red 202 ; et
une encre cyan contenant C.I. pigment blue 15:3 et/ou C.I. pigment blue 15:4 ;
dans lequel, lorsque l'on réalise le mélange des couleurs à travers la sortie du jet d'encre des encres dans l'assortiment d'encres de manière à ce que la couleur de sortie sous une source de lumière D50 soit telle que les coordonnées spatiales (L*,a*,b*) stipulées par le CIE soient (50,0,0), la différence entre la valeur maximum et la valeur minimum de la réflectance de la couleur de sortie sur une gamme de longueurs d'onde de source lumineuse de 400 à 700 nm ne soit pas supérieure à 20 %.

2. Assortiment d'encres selon la revendication 1, dans lequel ladite encre jaune est telle que sa couleur de sortie à travers la sortie du jet d'encre à une réflectance non supérieure à 50 % sous une source lumineuse D50 à une longueur d'onde de source lumineuse de 500 nm.

3. Assortiment d'encres selon la revendication 1 ou 2, dans lequel ladite encre jaune est telle que sa couleur de sortie à travers la sortie de jet d'encre a une réflectance dans la gamme de 55 à 80 % sous une source lumineuse D50 à une longueur d'onde de la source lumineuse de 540 nm.

4. Assortiment d'encres selon l'une quelconque des revendications 1 à 3, dans lequel chacune de ladite encre jaune, ladite encre magenta et ladite encre cyan contient un copolymère séquencé (I) comme dispersant pour disperser le pigment ;
dans lequel ledit copolymère séquencé (I) a une structure AB, ABA ou ABC ;
dans lequel la séquence A est hydrophile ;
la séquence B est hydrophobe et contient au moins 30 % en poids sur la base du poids total de la séquence B d'un monomère non acrylique choisi dans le groupe constitué
(1) des molécules ayant la formule générale CH₂=CH-R, où R est un groupe alkyle en C₆ à C₂₀ éventuellement substitué, un groupe aryle, un groupe aralkyle ou un groupe alkaryle,
(2) des molécules ayant la formule générale CH₂=CH-OR¹, où R¹ est un groupe alkyle en C₃ à C₂₀ éventuellement substitué, un groupe aryle, un groupe aralkyle ou un groupe alkaryle,
(3) des molécules ayant la formule générale CH₂=CH-O-C(O)R¹, où R¹ est tel qu'en (2) ci-dessus, et
(4) des molécules ayant la formule générale CH₂=CH-NR²R³, où R² et R³ sont chacun indépendamment H ou un groupe alkyle en C₃ à C₂₀ éventuellement substitué, un groupe aryle, un groupe aralkyle ou un groupe alkaryle, avec la condition que R² et R³ ne soient pas tous les deux H ; et
la séquence C peut être choisie librement.

5. Assortiment d'encres selon l'une quelconque des revendications 1 à 4, dans lequel chacune de ladite encre jaune, ladite encre magenta et ladite encre cyan contient un 1,2-alcanediol.

6. Assortiment d'encres selon l'une quelconque des revendications 1 à 5, dans lequel chacune de ladite encre jaune, ladite encre magenta et ladite encre cyan contient un agent tensio-actif de type glycol acétylénique.

7. Assortiment d'encres selon l'une quelconque des revendications 1 à 6, comprenant en outre une encre verte.

8. Assortiment d'encres selon la revendication 7, dans lequel ladite encre verte contient un pigment vert comme colorant.

9. Assortiment d'encres selon la revendication 8, dans lequel ledit pigment vert comprend C.I. pigment green 7 et/ou C.I. pigment green 36.

10. Assortiment d'encres selon l'une quelconque des revendications 1 à 9, comprenant en outre une encre noire.

11. Assortiment d'encres selon l'une quelconque des revendications 1 à 10, comprenant en outre une encre magenta clair et une encre cyan clair.

12. Assortiment d'encres selon l'une quelconque des revendications 1 à 9, comprenant en outre une encre noire, une encre magenta clair et une encre cyan clair, dans lequel chacune de ladite encre noire, ladite encre magenta clair et ladite encre cyan clair contient un pigment comme colorant, et un copolymère séquencé (I) comme dispersant pour disperser le pigment ;
dans lequel ledit copolymère séquencé (I) a une structure AB, ABA ou ABC ;
dans lequel la séquence A est hydrophile ;
la séquence B est hydrophobe et contient au moins 30 % en poids sur la base du poids total de la séquence B d'un monomère non acrylique choisi dans le groupe constitué
(1) des molécules ayant la formule générale CH₂=CH-R, où R est un groupe alkyle en C₆ à C₂₀ éventuellement substitué, un groupe aryle, un groupe aralkyle ou un groupe alkaryle,
(2) des molécules ayant la formule générale CH₂=CH-OR¹, où R¹ est un groupe alkyle en C₃ à C₂₀ éventuellement substitué, un groupe aryle, un groupe aralkyle ou un groupe alkaxyle,
(3) des molécules ayant la formule générale CH₂=CH-O-C(O)R¹, où R¹ est tel qu'en (2) ci-dessus, et
(4) des molécules ayant la formule générale CH₂=CH-NR²R³, où R² et R³ sont chacun indépendamment H ou un groupe alkyle en C₃ à C₂₀ éventuellement substitué, un groupe aryle, un groupe aralkyle ou un groupe alkaryle, avec la condition que R² et R³ ne soient pas tous les deux H ; et
la séquence C peut être choisie librement.

13. Assortiment d'encres selon la revendication 12, dans lequel chacune de ladite encre noire, ladite encre magenta clair et ladite encre cyan clair contient un 1,2-alcanediol.

14. Assortiment d'encres selon la revendication 13, dans lequel chacune de ladite encre noire, ladite encre magenta clair et ladite encre cyan clair contient en outre un agent tensio-actif de type glycol acétylénique.

15. Procédé d'enregistrement, dans lequel on forme une image sur un milieu d'enregistrement en utilisant l'assortiment d'encres selon l'une quelconque des revendications 1 à 14.

16. Article enregistré, comprenant un milieu d'enregistrement ayant une image formée dessus en utilisant l'assortiment d'encres selon l'une quelconque des revendications 1 à 14.
